# FASCICULE DE BREVET EUROPEEN

(11) **EP 0 441 679 B1**
(45) Date de publication et mention de la délivrance du brevet: **15.09.1993**
(21) Numéro de dépôt: 91400214.2
(22) Date de dépôt: 30.01.1991
(51) Int. Cl.: B24B 49/16, B24B 41/06, B23Q 5/22

(54) **Montage adaptable à porte-outil pour ajustage avec robot**
Anpassbare Anordnung mit Werkzeugträger zum Justieren mit Hilfe eines Roboters
Adaptable fitting for tool-holder for use with a robot

(30) Priorité: 09.02.1990 FR 9001502
(43) Date de publication de la demande: 14.08.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Bellenoue, Serge, Michel, F-95590 Presles (FR); Boisard, Didier Christian, F-93800 Epinay sur Seine (FR); Krolik, Philippe, F-93000 Bobigny (FR); Richard, Jean-François Henri, F-93800 Epinay sur Seine (FR); Rosin, Hubert Georges Marie, F-95610 Eragny sur Oise (FR)
(74) Mandataire: Moinat, François

(56) Documents cités:
- DE-B- 1 281 303
- DE-C- 1 001 149
- FR-A- 2 499 442
- US-A- 3 596 506
- PATENT ABSTRACTS OF JAPAN, vol. 7, no. 47 (M-196)[1192], 24 février 1983; & JP-A-57 194877 (TAIYOU CHIYUUKI K.K.) 30-11-1982

## Description

La présente invention concerne un montage adaptable selon le préambule de la revendication 1.

Des exemples de techniques d'ajustage, notamment par ébavurage ou chanfreinage d'arêtes usinées de pièces mécaniques, ont été donnés par FR 2 639 573 et par EP-A-0 421 872 (état de la technique selon l'Art. 54(3) CBE). Ces solutions antérieures prévoient une liaison souple entre un bras mobile de robot et un support d'outil. Ces moyens connus permettent notamment d'obtenir un réglage d'effort et en faisant travailler un outil d'usinage à effort constant, d'obtenir une adaptation à un contour géométrique d'arête, variable d'une pièce à l'autre.

Dans certaines applications particulières d'ajustage de pièces mécaniques toutefois, l'optimisation de la cinématique du robot utilisé conduit à une utilisation en mode dit "pièce embarquée" dans lequel la pièce à usiner est portée par l'extrémité d'un bras mobile de robot et l'outil est porté par un montage à poste fixe. Les buts de l'invention sont dans ces applications de disposer d'un tel montage permettant, afin de respecter les tolérances d'ajustage, d'obtenir un effort constant au contact pièce/outil et également d'absorber l'effet des dispersions géométriques, résultant notamment des tolérances de profil à la suite des opérations précédentes de fabrication ou d'une pièce à l'autre. Les applications visées concernent notamment et à titre d'exemple, les opérations d'ajustages d'aubes pour moteurs aéronautiques ou turbomachines au moyen d'outils rotatifs du type fraise ou meule.

On connaît par ailleurs, par WO 89/02810 un exemple de bras de robot équilibré statiquement dans lequel les axes de commande se coupent au centre de gravité dudit bras.

Un montage selon le préambule de la revendication 1 répondant aux conditions précitées dans les conditions d'utilisation indiquées est caractérisé en ce que le porte-outil est relié par des moyens de solidarisation à un fléau susceptible de pivoter autour d'un axe horizontal situé dans le plan médiateur du fléau et perpendiculaire au plan du fléau, une tige portant une masselotte étant articulée à chaque extrémité dudit fléau, lesdits masselottes étant coulissantes sur les tiges et reposant sur des butées réglables, lorsque le montage est en position d'équilibre. Avantageusement ledit montage comporte un bâti à socle supportant ledit fléau, les tiges et leurs masselottes, ledit porte-outil et les moyens de solidarisation entre le fléau et le porte-outil et le socle porte en outre lesdits butées constituées par deux éléments filetés vissés et coopérant chacun avec une masselotte pour assurer le réglage de la course active dudit fléau ainsi que deux supports portés par ledit socle et comportant chacun une butée de réglage de la course maximale dudit fléau.

D'autres caractéristiques et avantages de l'invention seront mieux compris à la lecture de la description qui va suivre d'un mode de réalisation de l'invention, en référence aux dessins annexés sur lesquels :
- la figure 1 représente une vue schématique partielle en perspective d'une installation de mise en oeuvre d'une opération d'ajustage sur pièce ;
- La figure 2 représente une vue schématique en perspective d'un montage à porte-outil, selon un mode de réalisation de l'invention et faisant partie de l'installation représentée sur la figure 1.

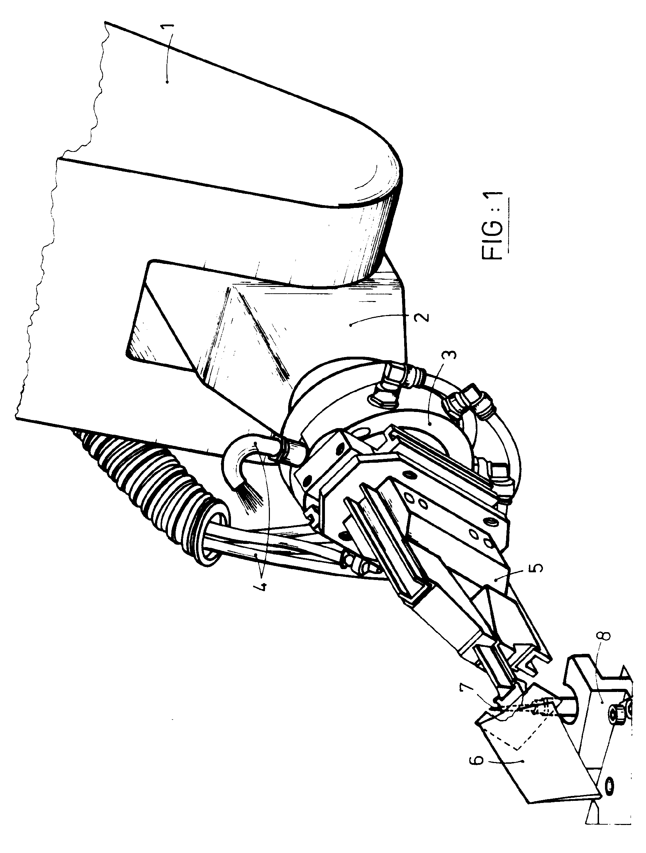

Comme représenté schématiquement sur la figure 1, un robot peut être utilisé pour effectuer des opérations d'ajustage sur pièces mécaniques diverses, notamment des pièces pour moteurs aéronautiques telles que des aubes, par exemple, pour lesquelles des tolérances précises d'usinage et une grande qualité de finition sont exigées. Le robot 1 n'est que partiellement représenté sur la figure 1 et comporte notamment un bras 2 à plusieurs articulations lui donnant plusieurs degrés de liberté.

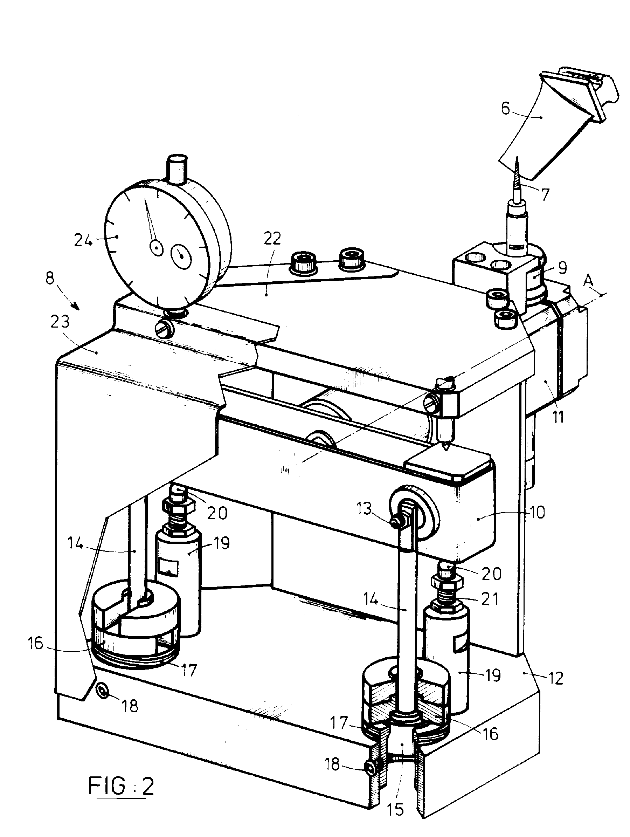

L'extrémité 3 dudit bras de robot peut ainsi être asservie à suivre une trajectoire dans l'espace déterminée par les moyens de commande, non représentés au dessin, du robot. Des moyens de liaison tels que 4 assurent les transmissions. Ladite extrémité 3 est munie de moyens de préhension 5 qui permettent la prise d'une pièce telle que 6. L'opération d'ajustage est effectuée sur ladite pièce 6 au moyen d'un outil rotatif d'usinage 7 tel qu'une fraise ou une meule. Ledit outil 7 est porté par un montage 8 dont la réalisation est l'objet de la présente invention et qui sera décrit plus en détails en référence à la figure 2.

L'outil 7 est porté et entraîné en rotation par un dispositif d'usinage ou porte-outil 9 tel qu'une meuleuse qui fait partie dudit montage 8.

Le montage 8 comporte un ensemble à bascule constitué par un élément formant fléau 10 qui est mobile autour d'un axe horizontal A situé dans le plan médiateur dudit fléau.

Ledit porte-outil 9 est supporté par un élément de solidarisation 11 au fléau 10, disposé selon ledit axe A. Le montage 8 comporte en outre un bâti reposant sur un socle 12. A chaque extrémité du fléau 10 est fixée au moyen d'une articulation 13 une tige 14 disposée selon une direction verticale.

Chaque tige 14 est terminée à son extrémité inférieure par un support 15 qui supporte des masselottes 16 de masse déterminée. La partie correspondante coopérante du socle 12 porte un élément fileté 17 vissé qui permet de régler la course active du fléau 10. Il en résulte en effet une position du fléau 10 à partir de sa position d'équilibre à partir de laquelle les masselottes 16 tendent à ramener le fléau 10 vers ladite position d'équilibre.

Après réglage de leur position, lesdits éléments filetés 17 sont bloqués, comme dans l'exemple représenté sur la figure 2, au moyen de vis de blocage 18. Deux supports 19 sont en outre disposés sur ledit socle 12, portant chacun un élément à leur extrémité supérieure qui forme une butée 20 réglable, par exemple au moyen d'une partie filetée 21. Le réglage des butées 20 permet de régler la course maximale du fléau 10 qui est susceptible de venir au contact de la face supérieure desdites butées. Le montage 8 est complété par une platine supérieure 22 et un habillage 23 partiellement arraché sur la vue de la figure 2 pour montrer les éléments internes du montage. Pour effectuer les réglages de course du fléau 10, des moyens de mesure sont adjoints, tels que des comparateurs 24 fixés sur ladite platine 22 du montage 8.

Lors de la mise en oeuvre du montage 8 dans une opération d'ajustage au moyen de l'ensemble robot 1 et montage 8, représenté sur la figure 1, le mode de fonctionnement résulte de la description qui vient d'en être faite en référence à la figure 2. La rotation en pivotement du fléau 10 autour de l'axe horizontal A, dans un sens ou dans l'autre, permet en effet de réaliser un déplacement de l'outil 7 suivant une trajectoire circulaire dans le sens correspondant à celui du fléau. L'équilibre est maintenu par l'action des masselottes 16 dans les limites prédéterminées au moyen des réglages imposés et des caractéristiques choisies pour l'ensemble articulé formé par le fléau 10, les tiges 14 et les masselottes 16, de manière à obtenir un effort constant entre l'outil 7 et la pièce à usiner 6 au cours de l'usinage. Dans des exemples d'application, lors de l'exécution d'opérations d'ajustage sur pièces, on a pu vérifier qu'une plage de tolérance de 0,4mm est obtenue après ajustage alors que les pièces présentaient à l'origine des dispersions d'usinage pouvant aller jusqu'à 2mm.

## Revendications

1. Montage adaptable destiné à des opérations d'ajustage sur pièces mécaniques portées par un bras (2) de robot comportant un porte-outil (9) monté sur un ensemble-support caractérisé en ce que ledit porte-outil (9) est relié par des moyens de solidarisation (11) à un fléau (10) susceptible de pivoter autour d'un axe horizontal A situé dans le plan médiateur du fléau (10) et perpendiculaire au plan du fléau (10), une tige (14) portant une masselotte (16) étant articulée à chaque extrémité dudit fléau (10), lesdits masselottes (16) étant coulissantes sur les tiges (14) et reposant sur des butées réglables (17), lorsque le montage est en position d'équilibre.

2. Montage selon la revendication 1 dans lequel ledit ensemble-support comporte un bâti à socle (12) supportant ledit fléau (10), les tiges (14) et leurs masselottes (16), ledit porte-outil (9) et les moyens de solidarisation (11) entre le fléau (10) et le porte-outil (9) et le socle (12) porte entre outre lesdits butées constituées par deux éléments filetés (17) vissés et coopérant chacun avec une masselotte (16) pour assurer le réglage de la course active dudit fléau (10) ainsi que deux supports (19) portés par ledit socle (12) et comportant chacun une butée (20) de réglage de la course maximale dudit fléau (10).

3. Montage selon la revendication 2 dans lequel une vis de blocage (18) est associée à chacun desdits éléments filetés (17).

4. Montage selon l'une des revendications 2 ou 3 dans lequel deux moyens de mesure du genre comparateur (24) permettent d'assurer les réglages de course du fléau (10).

## Patentansprüche

1. Anpaßbare Montageanordnung zur Durchführung von Justierungen an von einem Roboterarm (2) getragenen mechanischen Teilen
mit einem an einer Trägerbaugruppe montierten Werkzeughalter (9),
**dadurch gekennzeichnet**,
daß der Werkzeughalter (9) über Befestigungsmittel (11) mit einem Wagebalken (10) verbunden ist, der um eine in der Schwereebene des Wagebalkens (10) liegende und rechtwinklig zu Ebene des Wagebalkens (10 verlaufende horizontale Achse A verschwenkbar ist,
daß mit jedem Ende des Wagebalkens (10) eine ein Regelungsgewicht (16) tragende Stange (14) gelenkig verbunden ist,
und daß die Regelungsgewichte (16) auf den Stangen (14) gleiten und auf einstellbaren Anschlägen (17) ruhen, wenn sich die Montageanordnung im Gleichgewicht befindet.

2. Montageanordnung nach Anspruch 1, bei der die genannte Trägergruppe ein Untergestell (12) umfaßt, das den Wagebalken (10), die Stangen (14) und ihre Regelungsgewichte (16, den Werkzeughalter (9) und die zwischen dem Wagebalken (10) und dem Werkzeughalter (9) vorgesehenen Befestigungsmittel (11) trägt, wobei das Untergestell (12) außerdem die genannten Anschläge trägt, die aus zwei eingeschraubten Gewindeelementen (17) bestehen, die jeweils mit einem der Regelungsgewichte (16) zusammenwirken, um die Einstellung der aktiven Auslenkung des Wagebalkens (10) zu ermöglichen, sowie aus zwei von dem Untergestell (12) getragenen Haltern (19), die jeweils einen Anschlag (20) zur Einstellung der maximalen Auslenkung des Wagebalkens (10) aufweisen.

3. Montageanordnung nach Anspruch 2, bei der jedem der Gewindeelemente (17) eine Blockierschraube (18) zugeordnet ist.

4. Montageanordnung nach Anspruch 2 oder 3, bei der bei zwei Meßeinrichtungen (24) vom Vergleichertyp die Einstellungen der Auslenkung des Wagebalkens (10) sichern.

## Claims

1. Adaptable mounting intended for machine-finishing operations on mechanical components carried on a robot arm (2) comprising a tool carrier (9) mounted on a supporting assembly characterised in that the said tool carrier (9) is rigidly connected by a means (11) to a balance beam (10) pivoting about a horizontal axis A situated in the mean plane of the balance beam (10) and perpendicular to the plane of the balance beam (10), a rod (14) carrying a bobweight (16) being articulated at each end of the balance beam (10), the said bobweights (16) slotting onto the rods (14) and resting on one of the adjustable stops (17) when the mounting is in the position of equilibrium.

2. Mounting in accordance with Claim 1 in which the said supporting assembly comprises a frame with a base plinth (12) supporting the said balance beam (10), the rods (14) and their bobweights (16), the said tool carrier (9) and the means (11) of rigidly attaching the balance beam (10) to the tool carrier (9) and the base plinth (12) carries, in addition, the said stops being constituted by two threaded elements (17) and each working in conjunction with a bobweight (16) to ensure the adjustment of the active travel of the said balance beam (10) as well as two supports (19) carried on the said base plinth (12) and each comprising an adjustable stop (20) used for regulating the maximum travel of the said balance beam (10).

3. Mounting in accordance with Claim 2, in which a locking screw (18) is associated with each of the threaded elements (17).

4. Mounting in accordance with either of Claims 2 or 3 in which two means of measurement of the comparator type (24) enable the travel of the balance beam (10) to be adjusted.
